(19) Europäisches Patentamt
European Patent Office
Office européen des brevets

(11) **EP 4 508 137 B1**

(12) **EUROPEAN PATENT SPECIFICATION**

(45) Date of publication and mention of the grant of the patent:
**24.06.2026 Bulletin 2026/26**

(21) Application number: **23719010.3**

(22) Date of filing: **07.04.2023**

(51) International Patent Classification (IPC):
***C08L 23/14*** *(2006.01)* ***C08F 210/06*** *(2006.01)*

(52) Cooperative Patent Classification (CPC):
(C-Sets available)
**C08F 210/06; C08L 23/14;** C08L 2205/025 (Cont.)

(86) International application number:
**PCT/EP2023/059308**

(87) International publication number:
**WO 2023/198642 (19.10.2023 Gazette 2023/42)**

(54) **PROPYLENE-BASED COPOLYMER COMPOSITION**

COPOLYMERZUSAMMENSETZUNG BASIEREND AUF PROPYLEN

COMPOSITION DE COPOLYMÈRE À BASE DE PROPYLÈNE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.04.2022 EP 22167919**

(43) Date of publication of application:
**19.02.2025 Bulletin 2025/08**

(73) Proprietor: **Basell Poliolefine Italia S.r.l.**
**20121 Milano (IT)**

(72) Inventors:
- **DE CAPUA, Alberta**
  **44122 Ferrara (IT)**
- **CIACCIA, Eleonora**
  **44122 Ferrara (IT)**
- **CAVALIERI, Claudio**
  **44122 Ferrara (IT)**
- **DI CAPUA, Alessia**
  **44122 Ferrara (IT)**
- **BASILE, Lelio**
  **44122 Ferrara (IT)**
- **CAPUTO, Tiziana**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 2 655 506**
**WO-A1-01/92406**
**WO-A1-2020/148319**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 4/6465;**
**C08F 210/06, C08F 4/654;**
**C08L 23/14, C08L 23/14;**
C08F 210/06, C08F 210/02, C08F 2500/12, C08F 2500/17, C08F 2500/27, C08F 2500/35, C08F 2500/31

## Description

FIELD OF THE INVENTION

The present disclosure relates to a composition comprising propylene ethylene copolymers. The composition having a particularly balance of properties in particular an high ration flexural modulus/haze. The composition is particularly fit for the production of blow molding object in particular bottles.

BACKGROUND OF THE INVENTION

It is well known in the polymer field that different applications require specifically tailored polymers to achieve the individual demanding properties. For instance a polymer used for injection molding must necessarily have other properties as a polymer used for blow molding.

The extrusion blow molding process for instance is a very special process that allows in a flexible and cheap way the preparation of different kind of bottles with respect to size and shape. One main disadvantage in this process is the complexity of the solidification step compared to normal injection molding.

As a consequence thereof extrusion blown molded articles, like bottles, normally show inferior optical properties compared to any injection molded articles. For instance, the surface property inside and/or outside of extrusion blown bottles is typically non-uniform (flow lines, melt fracture) leading to lower overall gloss and transparency compared to injection molded bottles or injection stretched blown molded. When there is the need to produce soft articles, the articles has to have low haze and low flexural modulus. High flexural modulus products are normally associated with low haze thus when there is the need to lower the flexural modulus in order to have soft product the haze becomes worse.

Therefore there is the need to have a polymer showing a particular balance of flexural modulus and haze so that to improve optical properties even in the presence of a low modulus. This property can be expressed by the ratio of flexural modulus/haze.

WO 2014/173533 relates to a multimodal polypropylene composition suitable for pipe applications comprising a multimodal propylene copolymer (U) with at least one comonomer selected from alpha-olefins with 2 or 4 to 8 carbon atoms in a total amount of 4.0 to 10.0 mole-%,
wherein the multimodal polypropylene composition has a melt flow rate MFR2 (2.16 kg, 230 °C) of 0.25 to 1.00 g/10 min determined according to ISO 1133, a content of xylene cold solubles (XCS) of 4.0 to 17 .O wt.-% determined at 25 °C according to ISO 16152, and a polydispersity index PI of 2.5 to 4.0 Pa-1.

The fist propylene polymer has an MFR of 1.0 to 5.0 g/10 min and the second propylene copolymer has an MFR of 0.1 to 0.6 g/10 min.

WO2016/012199 relates to a polyolefin composition comprising:

A) from 90 wt% to 99 wt%;of a copolymer of propylene with ethylene wherein:

i) the content of ethylene derived units is comprised between 1.0 wt% and 8.0 wt%;

B) from 1.0 wt% to 10.0 wt%; of a propylene ethylene copolymer containing from 8.0 wt% to 20.0 wt% of ethylene derived units. The polyolefin composition being used for pipes.

WO2020/148319 relates to a propylene polymer composition for extrusion blow moulding comprising at least one propylene copolymer (C-PP), and an a-nucleating agent (N), wherein the propylene copolymer (C-PP) comprises two propylene copolymer fractions (PP1) and (PP2), wherein propylene copolymer fraction (PP1) is contained in the propylene copolymer (C-PP) in an amount of 30 to 70 wt. % and the propylene copolymer fraction (PP2) is contained in the propylene copolymer (C-PP) in an amount of 70 to 30 wt.%.

The comonomer content of propylene copolymer fraction (PP1) is in the range of 0.5 to 2.6 wt.-% and the comonomer content of the propylene copolymer fraction (PP1) is lower compared to the comonomer content of the propylene copolymer fraction (PP2), and the propylene polymer composition has a melt flow rate MFR2 (230 °C) measured according to according to ISO 1133 of 1 to 5 g/10min.

In the extrusion blow molding (EBM) process a polymer melt is first extruded through a tubular die into air forming a polymer tube, subsequently blowing up said polymer tube (typically called "parison" in this technical field) until the outside of the tube reaches the boundaries of the mold. To cover the wall of the mold fully with the blown up polymer tube is rather difficult compared to injection molding because the air between polymer tube and mold has to be removed totally which is a demanding process step. Further the inside of the polymer tube is not in contact with the mold and therefore there is only little possibility to influence the inner surface structure of the tube.

The applicant discovered that it is possible to achieve a balancement between optical properties and softness of a

composition by fine tuning the two components.

SUMMARY OF THE INVENTION

Thus an object of the present disclosure is a polyolefin composition comprising:

A) from 70 wt% to 90 wt%;of a copolymer of propylene with ethylene wherein:

i) the content of ethylene derived units, measured by NMR, is comprised between 3.3 wt% and 6.0 wt%;
ii) the melting temperature, measured by DSC ranges from 132° C to 143° C;
iii) the melt flow rate (230°C/2.16 kg. ISO 1133) ranging from 1.1 g/10 min to 3.5 g/10min;
iv) the xylene solubles at 25°C ranges from 4.0 wt% to 10.0wt%;

B) from 10 wt% to 30 wt%; of a propylene ethylene copolymer containing from 3.6 wt% to 7.5 wt%; of ethylene derived units measured by NMR, having the melt flow rate (230°C/2.16 kg.. ISO 1133) ranging from 0.6 g/10 min to 10 g/10 min;

wherein the resulting polyolefin composition has:

i) the content of ethylene derived units measured by NMR, is comprised between 3.5 wt% and 5.5 wt%;
ii) the content of ethylene derived units measured by NMR, in the fraction soluble in xylene at 25° is comprised between 15.2 wt% and 23.2 wt%;
iii) a melt flow rate (ISO 1133 (230° C, 2.16 kg). ranging from 1.0 g/10 min to 4.0 g/10 min;
iv) the xylene solubles at 25°C ranges from 5.1 wt% to 12.0wt%;
v) the intrinsic viscosity, measured in tetrahydronaphthalene at 135 °C, of the fraction soluble in xylene at 25°C ranges from 0.6 dl/g to 2.5 dl/g
vi) the difference between the ethylene derived units content of component B and the ethylene derived units content of component A (C2B-C2A) ranges from 0.3 to 5.0 wt%

the sum A+B being 100.

DETAILED DESCRIPTION OF THE IN VENTION

Thus an object of the present disclosure is a polyolefin composition comprising:

A) from 70 wt% to 90 wt%; preferably from 72 wt% to 88 wt%; more preferably from 73 wt% to 86 wt% of a copolymer of propylene with ethylene wherein:

i) the content of ethylene derived units , measured by NMR, is comprised between 3.3 wt% and 6.0 wt%; preferably is comprised between 3.5 wt% and 5.5 wt% more preferably is comprised between 3.7 wt% and 4.8 wt%;
ii) the melting temperature, measured by DSC, ranges from 132° C to 143° C; preferably ranges from 134° C to 142° C; more preferably ranges from 136° C to 141° C;
iii) the melt flow rate (230°C/2.16 kg. ISO 1133) ranges from 1.1 g/10 min to 3.5 g/10 min; preferably ranges from 1.2 g/10 min to 2.5 g/10 min; more preferably ranges from 1.3 g/10 min to 2.0 g/10 min;
iv) the xylene solubles at 25°C ranges from 4.0 wt% to 10.0 wt%; preferably ranges from 4.5 wt% to 9.0 wt%; more preferably ranges from 5.2 wt% to 8.0 wt%;

B) from 12 wt% to 30 wt%; preferably from 13 wt% to 28 wt% more preferably from 14wt% to 27 wt%, of a propylene ethylene copolymer containing from 3.5 wt% to 7.5 wt% preferably from 3.8 wt% to 7.0 wt% more preferably from 4.0 wt% to 6.8 wt% of ethylene derived units, measured by NMR, having the melt flow rate (230°C/2.16 kg.. ISO 1133) ranging from 0.6 g/10 min to 10 g/10 min; preferably ranging from 0.8 g/10 min to 9 g/10 min; more preferably ranging from 2.0 g/10 min to 8.5 g/10 min

wherein the resulting polyolefin composition has:

i) the content of ethylene derived units, measured by NMR, is comprised between 3.5 wt% and 5.5 wt%; preferably is comprised between 3.8 wt% and 5.3 wt%; more preferably is comprised between 3.9 wt% and 5.0 wt%;
ii) the content of ethylene derived units, measured by NMR, in the fraction soluble in xylene at 25° is comprised

between 15.2 wt% and 23.2 wt%; preferably is comprised between 16.3 wt% and 22.2 wt%; more preferably is comprised between 17.2 wt% and 21.3 wt%;

iii) a melt flow rate (ISO 1133 (230° C, 2.16 kg) ranges from 1.0 g/10min to 4.0 g/10 min; preferably ranges from 1.1 g/10min to 2.9 g/10 min; more preferably ranges from 1.2 g/10min to 2.5 g/10 min;

iv) the xylene solubles at 25°C ranges from 5.1 wt% to 12.0wt%; preferably ranges from 5.5 wt% to 11.0wt%; more preferably ranges from 6.0 wt% to 10.0wt%;

v) the intrinsic viscosity, measured in tetrahydronaphthalene at 135 °C, of the fraction soluble in xylene at 25°C ranges from 0.6 dl/g to 2.5 dl/g; preferably ranges from 0.8 dl/g to 2.0 dl/g; more preferably ranges from1.0 dl/g to 1.8 dl/g;

vi) the difference between the ethylene derived units content of component B and the ethylene derived units content of component B (C2B-C2A) ranges from 0.3 to 5.0 wt%; preferably from 0.4 to 4.0 wt%; more preferably from 0.4 and 3.0 wt%;

the sum A+B being 100.

The term copolymer has to be intended a bipolymer containing two monomers, propylene and a ethylene.

The polyolefin composition is preferably endowed with one or more of the following features:

i) haze measured on 1 mm plaque according to the method disclosed in the examples ranging from 20.0 % to 26.0 %; preferably ranging from 21.0 % to 25.0 %; more preferably ranging from 22.0 % to 24.5 %;

ii) Flexural modulus (ASTM D 790) ranging from 500 MPa to 770 MPa; preferably from 550 MPa to 740 MPa; even more preferably from 600 MPa to 720 MPa;

iii) Charpy impact strength at 23°C (ISO 179-1:2010 ) ranging from 8.0 kj/$m^2$ to 20.0 kj/$m^2$; preferably ranging from 10.0 kj/$m^2$ to 18.0 kj/$m^2$; more preferably ranging from 10.5 kj/$m^2$ to 17.0 kj/$m^2$;

iv) ratio between flexural modulus and haze; F/H ratio ranging from 25.0 to 31.0; preferably ranging from 25.5 to 30.0; more preferably ranging from 26.0 to 29.0. Higher ratio means that the flexural modulus is too high so that the composition is not enough soft, on the contrary lower ratio means that the haze is too high so that the material does not have good optical properties.

The polyolefin composition of the present invention is particularly fit for obtaining small blow molded articles such as bottles.

Thus a further object of the present invention is a bottle comprising the composition of the present invention.

Small blow molded articles can be manufactured through a variety of industrial processes well known in the art.

The composition of the present invention can be prepared by blending component A) and B).

The polymerization of A) and B) can be carried out in the presence of Ziegler-Natta catalysts. An essential component of said catalysts is a solid catalyst component comprising a titanium compound having at least one titanium-halogen bond, and an electron-donor compound, both supported on a magnesium halide in active form. Another essential component (co-catalyst) is an organoaluminium compound, such as an aluminium alkyl compound.

An external donor is optionally added.

The catalysts generally used in the process of the invention are capable of producing polypropylene with a value of xylene insolubility at ambient temperature greater than 90%, preferably greater than 95%.

Catalysts having the above mentioned characteristics are well known in the patent literature; particularly advantageous are the catalysts described in US patent 4,399,054 and European patent 45977. Other examples can be found in US patent 4,472,524.

The solid catalyst components used in said catalysts comprise, as electron-donors (internal donors), compounds selected from the group consisting of ethers, ketones, lactones, compounds containing N, P and/or S atoms, and esters of mono- and dicarboxylic acids.

Particularly suitable electron-donor compounds are esters of phtalic acid and 1,3-diethers of formula:

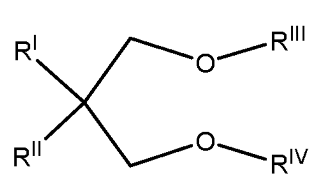

wherein $R^I$ and $R^{II}$ are the same or different and are $C_1$-$C_{18}$ alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic

structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatom(s) as substitutes for carbon or hydrogen atoms, or both.

Ethers of this type are described in published European patent applications 361493 and 728769.

Representative examples of said diethers are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

Other suitable electron-donor compounds are phthalic acid esters, such as diisobutyl, dioctyl, diphenyl and benzylbutyl phthalate.

The preparation of the above mentioned catalyst component is carried out according to various methods.

For example, a MgCl2•nROH adduct (in particular in the form of spheroidal particles) wherein n is generally from 1 to 3 and ROH is ethanol, butanol or isobutanol, is reacted with an excess of TiCl4 containing the electron-donor compound. The reaction temperature is generally from 80 to 120° C. The solid is then isolated and reacted once more with TiCl4, in the presence or absence of the electron-donor compound, after which it is separated and washed with aliquots of a hydrocarbon until all chlorine ions have disappeared.

In the solid catalyst component the titanium compound, expressed as Ti, is generally present in an amount from 0.5 to 10% by weight. The quantity of electron-donor compound which remains fixed on the solid catalyst component generally is 5 to 20% by moles with respect to the magnesium dihalide.

The titanium compounds, which can be used for the preparation of the solid catalyst component, are the halides and the halogen alcoholates of titanium. Titanium tetrachloride is the preferred compound.

The reactions described above result in the formation of a magnesium halide in active form. Other reactions are known in the literature, which cause the formation of magnesium halide in active form starting from magnesium compounds other than halides, such as magnesium carboxylates.

The Al-alkyl compounds used as co-catalysts comprise the Al-trialkyls, such as Al-triethyl, Al-triisobutyl, Al-tri-n-butyl, and linear or cyclic Al-alkyl compounds containing two or more Al atoms bonded to each other by way of O or N atoms, or SO4 or SO3 groups.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are (tert-butyl)2Si(OCH3)2, (cyclohexyl)(methyl)Si (OCH3)2, (cyclopentyl) 2Si(OCH3)2 and (phenyl)2Si(OCH3)2 and (1,1,2-trimethylpropyl)Si(OCH3)3.

1,3-diethers having the formulae described above can also be used advantageously. If the internal donor is one of these diethers, the external donors can be omitted.

In particular, even if many other combinations of the previously said catalyst components may allow to obtain compositions according to the present invention, the component A) are preferably prepared by using catalysts containing a phthalate as internal donor and (cyclopentyl)2Si(OCH3)2 as outside donor, or the said 1,3-diethers as internal donors.

A further The Ziegler-Natta catalysts that can be used to produce a propylene polymer of the present invention is a solid catalyst component comprising a magnesium halide, a titanium compound having at least a Ti-halogen bond as above described and at least two electron donor compounds selected from succinates and the other being selected from 1,3 diethers.

Component B) can be prepared by using the above described catalyst system or by using metallocene based catalyst system. Component B) can be obtained by using gasp phase polymerization processes slurry polymerization processes or solution polymerization processes.

Components (A) and (B) can be also prepared in a continuous sequential polymerization process, wherein component A) is prepared in the first reactor and component (B) is prepared in the second reactor in the presence of component A) according to the known techniques and operating in gas phase, or in liquid phase in the presence or not of inert diluent, or by mixed liquid-gas techniques.

The following examples are given to illustrate the present invention without limiting purpose.

EXAMPLE

**Characterization methods**

**Melting temperature and crystallization temperature:** Determined by differential scanning calorimetry (DSC)

. weighting 6 ±1 mg, is heated to 220 ±1° C at a rate of 20 °C/min and kept at 220 ±1° C for 2 minutes in nitrogen

stream and it is thereafter cooled at a rate of 20° C/min to 40 ±2° C, thereby kept at this temperature for 2 min to crystallize the sample. Then, the sample is again fused at a temperature rise rate of 20° C/min up to 220° C ±1. The melting scan is recorded, a thermogram is obtained, and, from this, melting temperatures and crystallization temperatures are read.

**Melt Flow Rate:** Determined according to the method ISO 1133 (230° C, 2.16 kg).

### Xylene-soluble fraction (XS) at 25°C

Xylene Solubles at 25°C have been determined according to ISO 16152: 2005; with solution volume of 250 ml, precipitation at 25°C for 20 minutes, 10 of which with the solution in agitation (magnetic stirrer), and drying at 70°C.

### Intrinsic Viscosity (I.V.)

The sample is dissolved by tetrahydronaphthalene at 135 °C and then it is poured into the capillary viscometer.

The viscometer tube (Ubbelohde type) is surrounded by a cylindrical glass jacket; this setup allows temperature control with a circulating thermostated liquid.

The downward passage of the meniscus is timed by a photoelectric device. The passage of the meniscus in front of the upper lamp starts the counter which has a quartz crystal oscillator. The meniscus stops the counter as it passes the lower lamp and the efflux time is registered: this is converted into a value of intrinsic viscosity through

### Haze (on 1 mm plaque)

According to the method used, 5x5 cm specimens are cut molded plaques of 1 mm thick and the haze value is measured using a Gardner photometric unit connected to a Hazemeter type UX-10 or an equivalent instrument having G.E. 1209 light source with filter "C". Reference samples of known haze are used for calibrating the instrument. The plaques to be tested are produced according to the following method.

75x75x1 mm plaques are molded with a GBF Plastiniector G235190 Injection Molding Machine, 90 tons under the following processing conditions:

Screw rotation speed: 120 rpm
Back pressure: 10 bar
Melt temperature: 260°C
Injection time: 5 sec
Switch to hold pressure: 50 bar
First stage hold pressure: 30 bar
Second stage pressure: 20 bar
Hold pressure profile: First stage 5 sec
Second stage 10 sec
Cooling time: 20 sec
Mold water temperature: 40°C

### Ethylene content in the copolymers

$^{13}C$ NMR spectra were acquired on a Bruker AV-600 spectrometer equipped with cryoprobe, operating at 160.91 MHz in the Fourier transform mode at 120 °C.

The peak of the $S\beta\beta$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane-*d2* at 120 °C with a 8 % wt/v concentration. Each spectrum was acquired with a 90° pulse, and 15 seconds of delay between pulses and CPD to remove $^{1}H$-$^{13}C$ coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride- diethyl-aluminum chloride" M. Kakugo, Y. Naito, K. Mizunuma and T. Miyatake, Macromolecules, 1982, 15, 1150) using the following equations:

$PPP = 100\ T\beta\beta/S$ $\quad PPE = 100\ T\beta\delta/S$ $\quad EPE = 100\ T\delta\delta/S$

$PEP = 100\ S\beta\beta/S$ $\quad PEE = 100\ S\beta\delta/S$ $\quad EEE = 100\ (0.25\ S\gamma\delta + 0.5\ S\delta\delta)/S$

(continued)

S = Tββ + Tβδ + Tδδ + Sββ + Sβδ + 0.25 Sγδ + 0.5 Sδδ

The molar percentage of ethylene content was evaluated using the following equation:

$$E\%\ mol = 100 * [PEP+PEE+EEE]'$$

The weight percentage of ethylene content was evaluated using the following equation:

$$E\%\ wt. = \frac{100 * E\%\ mol * MWE}{E\%\ mol * MWE + P\%\ mol * MWP}$$

where P% mol is the molar percentage of propylene content, while MWE and MWP are the molecular weights of ethylene and propylene, respectively.

The product of reactivity ratio r1r2 was calculated according to Carman (C.J. Carman, R.A. Harrington and C.E. Wilkes, Macromolecules, 1977; 10, 536) as:

$$r_1 r_2 = 1 + \left(\frac{EEE+PEE}{PEP}+1\right) - \left(\frac{P}{E}+1\right)\left(\frac{EEE+PEE}{PEP}+1\right)^{0.5}$$

The tacticity of Propylene sequences was calculated as mm content from the ratio of the PPP mm Tββ (28.90-29.65 ppm) and the whole Tββ (29.80-28.37 ppm).

Impact test: ISO 180

**Preparation of injection molded specimens:** test specimens 80 x 10 x 4 mm were obtained according to the method ISO 1873-2:2007.

**Preparation of injection molded specimens:** test specimens 80 x 10 x 4 mm were obtained according to the method ISO 1873-2:2007.

**Charpy Impact test at 23°C:** measured according to ISO 179-1:2010 on injection molded specimens.

**Example 1 according to the invention**

Catalyst system

The Ziegler-Natta catalyst was prepared according to the Example 5, lines 48-55 of the European Patent EP728769. Triethylaluminium (TEAL) was used as co-catalyst and dicyclopentyldimethoxysilane (DCPMS ) as external donor, with the weight ratios indicated in Table 1.

Prepolymerization treatment

Before introducing it into the polymerization reactors, the solid catalyst component described above is subjected to prepolymerization by maintaining it in suspension in liquid propylene at 20 °C for about 5 minutes before introducing it into the first polymerization reactor.

Polymerization

The polymerization run is conducted in continuous mode in a series of three reactors equipped with devices to transfer the product from one reactor to the one immediately next to it. The first two reactors are liquid phase reactors, and the third is a fluid bed gas phase reactor. Component (A) is prepared in the first and second reactor, while component (B) is prepared in the third.

Hydrogen is used as molecular weight regulator.

The gas phase (propylene, ethylene and hydrogen) is continuously analyzed via gas-chromatography.

At the end of the run the powder is discharged and dried under a nitrogen flow.

The main polymerization conditions are reported in Table1.

Table 1

| | | **ex1** | **ex2** | **ex3** |
|---|---|---|---|---|
| TEAL/solid catalyst component weight ratio | | 9.2 | 8.8 | 9.3 |
| TEAL/DCPMS weight ratio | | 3 | 4 | 4 |
| **Liquid phase reactors** | | | | |
| Polymerisation temperature | °C | 67 | 67 | 67 |
| Pressure | Bar-g | 39 | 39 | 39 |
| Residence time | minutes | 51 | 50 | 53 |
| H2 feed | molppm | 401 | 423 | 420 |
| C2/(C2 + C3) | Mol ratio | 0.049 | 0.050 | 0.050 |
| Polymerisation temperature | °C | 80 | 80 | 80 |
| Pressure | Barg | 18 | 18 | 18 |
| Residence time | min | 49 | 47 | 52 |
| C2/(C2 + C3) | Mol ratio | 0.052 | 0.058 | 0.062 |
| H2 / C2 | Mol ratio | 0.083 | 0.087 | 0.082 |
| C2=ethylene; C3=propylene; H2=hydrogen | | | | |

Table 2 reports the features of the compositons of exmaples 1-3 and comparative example 4

| Example | | Ex1 | Ex2 | Ex3 | comp Ex4 |
|---|---|---|---|---|---|
| **Component A)** | | | | | |
| | | | | | |
| Ethylene content | wt% | 4.0 | 4.3 | 4.3 | 2.6 |
| MFR | g/10’ | 1.5 | 1.5 | 1.6 | 5 |
| Xylene soluble at 25°C | wt% | 6.0 | 7.2 | 6.4 | - |
| Melting temperature | °C | 139 | 137.8 | 137.5 | - |
| **ComponentB)** | | | | | |
| split | wt% | 18 | 22 | 22 | 59.8 |
| Ethylene content in component b)* | wt% | 4.6 | 5.7 | 6.1 | 6.6 |
| MFR* | g/10’ | 2.55 | 2.65 | 7.24 | 0.66 |
| **Property of the composition** | | | | | |
| Xylene soluble at 25°C | wt% | 6.8 | 8.3 | 9.0 | - |
| MFR | g/10’ | 1.56 | 1.71 | 2.23 | 1.9 |
| XSIV (intrinsic viscosity of XS) | dl/g | 1.1 | 1.23 | 1.25 | 1.8 |
| Ethylene content on the xylene soluble fraction | Wt% | 18.8 | 18.2 | 17.9 | 17.6 |
| Ethylene content | wt% | 4.1 | 4.6 | 4.7 | 5.0 |
| Flexural Modulus | MPa | 710 | 660 | 630 | 792 |
| Haze (1 mm plaque) | % | 23.9 | 23.2 | 23.5 | 20.1 |
| Charpy impact strength 23°C | $Kj/m^2$ | 11.8 | 12.3 | 10.4 | - |

(continued)

| Property of the composition | | | | | |
|---|---|---|---|---|---|
| ratio FM/H | | 29.7 | 28.4 | 26.8 | 39.4 |
| *calculated comp Ex4 is example P2 of WO 2020/148319 | | | | | |

## Claims

**1.** A polyolefin composition comprising:

A) from 70 wt% to 90 wt% of a copolymer of propylene with ethylene wherein:

i) the content of ethylene derived units, measured by NMR, is comprised between 3.3 wt% and 6.0 wt%;
ii) the melting temperature, measured by DSC ranges from 132° C to 143° C;
iii) the melt flow rate (230°C/2.16 kg.. ISO 1133) ranging from 1.1 g/10 min to 3.5 g/10min;
iv) the xylene solubles at 25°C ranges from 4.0 wt% to 10.0wt%;

B) from 10 wt% to 30 wt%; of a propylene ethylene copolymer containing from 3.6 wt% to 7.5 wt%; of ethylene derived units measured by NMR, having the melt flow rate (230°C/2.16 kg.. ISO 1133) ranging from 0.6 g/10 min to 10 g/10 min;

wherein the resulting polyolefin composition has:

i) the content of ethylene derived units measured by NMR, is comprised between 3.5 wt% and 5.5 wt%;
ii) the content of ethylene derived units measured by NMR, in the fraction soluble in xylene at 25° is comprised between 15.2 wt% and 23.2 wt%;
iii) a melt flow rate (ISO 1133 (230° C, 2.16 kg). ranging from 1.0 g/10 min to 4.0 g/10 min;
iv) the xylene solubles at 25°C ranges from 5.1 wt% to 12.0wt%;
v) the intrinsic viscosity, measured in tetrahydronaphthalene at 135 °C, of the fraction soluble in xylene at 25°C ranges from 0.6 dl/g to 2.5 dl/g
vi) the difference between the ethylene derived units content of component B and the ethylene derived units content of component A (C2B-C2A) ranges from 0.3 to 5.0 wt%

the sum A+B being 100.

**2.** The polyolefin composition according to claim 1 wherein the content of ethylene derived units in component A) ranges from 3.5 wt% and 5.5 wt%.

**3.** The polyolefin composition according to any of claims 1-2 wherein in component A) the melt flow rate (230°C/2.16 kg.. ISO 1133) ranges from 1.2 g/10 min to 2.5 g/10 min.

**4.** The polyolefin composition according to any of claims 1-3 wherein in component A) the xylene solubles at 25°C ranges from 4.5 wt% to 9.0wt%.

**5.** The polyolefin composition according to any of claims 1-4 wherein in component B) the ethylene derived units content ranges from 3.8 wt% to 7.0 wt%.

**6.** The polyolefin composition according to any of claims 1-5 wherein the content of ethylene derived units, measured by NMR, is comprised between 3.8 wt% and 5.3 wt%.

**7.** The polyolefin composition according to any of claims 1-6 wherein the content of ethylene derived units, measured by NMR, in the fraction soluble in xylene at 25° is comprised between 16.3 wt% and 22.2 wt%.

**8.** The polyolefin composition according to any of claims 1-7 wherein the melt flow rate (ISO 1133 (230° C, 2.16 kg) ranges from 1.1 g/10 min to 2.9 g/10 min.

9. The polyolefin composition according to any of claims 1-8 wherein the xylene solubles at 25°C ranges from 5.5 wt% to 11.0 wt%.

10. The polyolefin composition according to any of claims 1-9 wherein the intrinsic viscosity, measured in tetrahydronaphthalene at 135 °C, of the fraction soluble in xylene at 25°C ranges from 0.8 dl/g to 2.0 dl/g.

11. The polyolefin composition according to any of claims 1-10 wherein the difference between the ethylene derived units content of component B and the ethylene derived units content of component B (C2B-C2A) ranges from 0.4 to 4.0 wt%.

12. The polyolefin composition according to any of claims 1-11 wherein in component B) the melt flow rate (230°C/2.16 kg.. ISO 1133) ranges from 0.8 g/10 min to 9.0 g/10 min..

13. The polyolefin composition according to any of claims 1-12 wherein he content of ethylene derived units, measured by NMR, in the fraction soluble in xylene at 25° is comprised between 17.2 wt% and 21.3 wt%.

14. Blow molded article comprising the polyolefin composition according to any of claims 1-12.

15. Bottle comprising the polyolefin composition according to any of claims 1-12

## Patentansprüche

1. Polyolefinzusammensetzung, umfassend:

   A) 70 Gew.% bis 90 Gew.% eines Copolymers von Propylen mit Ethylen, wobei:

      i) der Gehalt an von Ethylen abgeleiteten Einheiten, gemessen mittels NMR, zwischen 3,3 Gew.% und 6,0 Gew.% liegt;
      ii) die Schmelztemperatur, gemessen mittels DSC, im Bereich von 132 °C bis 143 °C liegt;
      iii) die Schmelzflussrate (230 °C/2,16 kg, ISO 1133) im Bereich von 1,1 g/10 min bis 3,5 g/10 min liegt;
      iv) die in Xylol bei 25 °C löslichen Materialien im Bereich von 4,0 Gew.% bis 10,0 Gew.% liegen;

   B) 10 Gew.% bis 30 Gew.% eines Propylen-Ethylen-Copolymers, das 3,6 Gew.% bis 7,5 Gew.% von Ethylen abgeleitete Einheiten enthält, gemessen mittels NMR, wobei die Schmelzflussrate (230 °C/2,16 kg, ISO 1133) im Bereich von 0,6 g/10 min bis 10 g/10 min liegt;

   wobei die resultierende Polyolefinzusammensetzung aufweist:

   i) der Gehalt an von Ethylen abgeleiteten Einheiten, gemessen mittels NMR, liegt zwischen 3,5 Gew.% und 5,5 Gew.%;
   ii) der Gehalt an von Ethylen abgeleiteten Einheiten in der in Xylol bei 25° löslichen Fraktion, gemessen mittels NMR, liegt zwischen 15,2 Gew.% und 23,2 Gew.%;
   iii) die Schmelzflussrate (ISO 1133, (230 °C, 2,16 kg)) liegt im Bereich von 1,0 g/10 min bis 4,0 g/10 min;
   iv) die in Xylol bei 25 °C löslichen Materialien liegen im Bereich von 5,1 Gew.% bis 12,0 Gew.%;
   v) die Grenzviskosität der in Xylol bei 25 °C löslichen Fraktion, gemessen in Tetrahydronaphthalin bei 135 °C, liegt im Bereich von 0,6 dl/g bis 2,5 dl/g;
   vi) die Differenz zwischen dem Gehalt an von Ethylen abgeleiteten Einheiten der Komponente B und dem Gehalt an von Ethylen abgeleiteten Einheiten der Komponente A (C2B-C2A) liegt im Bereich von 0,3 bis 5,0 Gew.%,

   wobei die Summe aus A + B 100 beträgt.

2. Polyolefinzusammensetzung nach Anspruch 1, wobei der Gehalt an von Ethylen abgeleiteten Einheiten in Komponente A) im Bereich von 3,5 Gew.% bis 5,5 Gew.% liegt.

3. Polyolefinzusammensetzung nach einem der Ansprüche 1 bis 2, wobei die Schmelzflussrate (230 °C/2,16 kg, ISO 1133) in Komponente A) im Bereich von 1,2 g/10 min bis 2,5 g/10 min liegt.

4. Polyolefinzusammensetzung nach einem der Ansprüche 1 bis 3, wobei in Komponente A) die in Xylol bei 25 °C

löslichen Materialien im Bereich von 4,5 Gew.% bis 9,0 Gew.% liegen.

**5.** Polyolefinzusammensetzung nach einem der Ansprüche 1 bis 4, wobei in Komponente B) der Gehalt an von Ethylen abgeleiteten Einheiten im Bereich von 3,8 Gew.% bis 7,0 Gew.% liegt.

**6.** Polyolefinzusammensetzung nach einem der Ansprüche 1 bis 5, wobei der Gehalt an von Ethylen abgeleiteten Einheiten, gemessen mittels NMR, zwischen 3,8 Gew.% und 5,3 Gew.% liegt.

**7.** Polyolefinzusammensetzung nach einem der Ansprüche 1 bis 6, wobei der Gehalt an von Ethylen abgeleiteten Einheiten, gemessen mittels NMR, in der in Xylol bei 25 °C löslichen Fraktion zwischen 16,3 Gew.% und 22,2 Gew.% liegt.

**8.** Polyolefinzusammensetzung nach einem der Ansprüche 1 bis 7, wobei die Schmelzflussrate (ISO 1133, (230 °C, 2,16 kg)) im Bereich von 1,1 g/10 min bis 2,9 g/10 min liegt.

**9.** Polyolefinzusammensetzung nach einem der Ansprüche 1 bis 8, wobei die in Xylol bei 25 °C löslichen Materialien im Bereich von 5,5 Gew.% bis 11,0 Gew.% liegen.

**10.** Polyolefinzusammensetzung nach einem der Ansprüche 1 bis 9, wobei die Grenzviskosität der in Xylol bei 25 °C löslichen Fraktion, gemessen in Tetrahydronaphthalin bei 135 °C, im Bereich von 0,8 dl/g bis 2,0 dl/g liegt.

**11.** Polyolefinzusammensetzung nach einem der Ansprüche 1 bis 10, wobei die Differenz zwischen dem Gehalt an von Ethylen abgeleiteten Einheiten der Komponente B und dem Gehalt an von Ethylen abgeleiteten Einheiten der Komponente B (C2B-C2A) im Bereich von 0,4 bis 4,0 Gew.% liegt.

**12.** Polyolefinzusammensetzung nach einem der Ansprüche 1 bis 11, wobei die Schmelzflussrate (230 °C/2,16 kg, ISO 1133) in Komponente B) im Bereich von 0,8 g/10 min bis 9,0 g/10 min liegt.

**13.** Polyolefinzusammensetzung nach einem der Ansprüche 1 bis 12, wobei der Gehalt an von Ethylen abgeleiteten Einheiten, gemessen mittels NMR, in der in Xylol bei 25 °C löslichen Fraktion zwischen 17,2 Gew.% und 21,3 Gew.% liegt.

**14.** Blasgeformter Artikel, umfassend die Polyolefinzusammensetzung nach einem der Ansprüche 1 bis 12.

**15.** Flasche, umfassend die Polyolefinzusammensetzung nach einem der Ansprüche 1 bis 12.

## Revendications

**1.** Composition polyoléfinique comprenant :

A) 70 % en poids à 90 % en poids d'un copolymère de propylène avec de l'éthylène, dans lequel :

i) la teneur en motifs dérivés de l'éthylène, mesurée par RMN, est située entre 3,3 % en poids et 6,0 % en poids ;
ii) la température de fusion, mesurée par calorimétrie différentielle à balayage, DSC, est située dans la plage de 132 °C à 143 °C ;
iii) l'indice de fluidité à chaud (230 °C/2,16 kg, ISO 1133) est situé dans la plage de 1,1 g/10 min à 3,5 g/10 min ;
(iv) les solubles dans le xylène à 25 °C sont situés dans la plage de 4,0 % en poids à 10,0 % en poids ;

B) 10 % en poids à 30 % en poids d'un copolymère de propylène-éthylène contenant 3,6 % en poids à 7,5 % en poids de motifs dérivés de l'éthylène, mesurés par RMN, présentant l'indice de fluidité à chaud (230 °C/2,16 kg, ISO 1133) situé dans la plage de 0,6 g/10 min à 10 g/10 min ;

dans laquelle la composition polyoléfinique résultante présente :

i) la teneur en motifs dérivés de l'éthylène, mesurée par RMN, située entre 3,5 % en poids et 5,5 % en poids ;
ii) la teneur en motifs dérivés de l'éthylène, mesurée par RMN, dans la fraction soluble dans le xylène à 25 °C

située entre 15,2 % en poids et 23,2 % en poids
iii) un indice de fluidité à chaud (ISO 1133, (230 °C, 2,16 kg)) situé dans la plage de 1,0 g/10 min à 4,0 g/10 min ;
(iv) les solubles dans le xylène à 25 °C situés dans la plage de 5,1 % en poids à 12,0 % en poids ;
v) la viscosité intrinsèque, mesurée dans le tétrahydronaphtalène à 135 °C, de la fraction soluble dans le xylène à 25 °C située dans la plage de 0,6 dl/g à 2,5 dl/g ;
vi) la différence entre la teneur en motifs dérivés de l'éthylène du constituant B et la teneur en motifs dérivés de l'éthylène du constituant A (C2B-C2A) située dans la plage de 0,3 à 5,0 % en poids ;

la somme A+B valant 100.

2. Composition polyoléfinique selon la revendication 1, dans laquelle la teneur en motifs dérivés de l'éthylène dans le constituant A) est située dans la plage de 3,5 % en poids à 5,5 % en poids.

3. Composition polyoléfinique selon l'une quelconque des revendications 1 à 2, dans laquelle, dans le constituant A), l'indice de fluidité à chaud (230 °C/2,16 kg, ISO 1133) est situé dans la plage de 1,2 g/10 min à 2,5 g/10 min.

4. Composition polyoléfinique selon l'une quelconque des revendications 1 à 3, dans laquelle, dans le constituant A), les solubles dans le xylène à 25 °C sont situés dans la plage de 4,5 % en poids à 9,0 % en poids.

5. Composition polyoléfinique selon l'une quelconque des revendications 1 à 4, dans laquelle, dans le constituant B), la teneur en motifs dérivés de l'éthylène est située dans la plage de 3,8 % en poids à 7,0 % en poids.

6. Composition polyoléfinique selon l'une quelconque des revendications 1 à 5, dans laquelle la teneur en motifs dérivés de l'éthylène, mesurée par RMN, est située entre 3,8 % en poids et 5,3 % en poids.

7. Composition polyoléfinique selon l'une quelconque des revendications 1 à 6, dans laquelle la teneur en motifs dérivés de l'éthylène, mesurée par RMN, dans la fraction soluble dans le xylène à 25 °C est située entre 16,3 % en poids et 22,2 % en poids.

8. Composition polyoléfinique selon l'une quelconque des revendications 1 à 7, dans laquelle l'indice de fluidité à chaud (ISO 1133, (230 °C, 2,16 kg)) est situé dans la plage de 1,1 g/10 min à 2,9 g/10 min.

9. Composition polyoléfinique selon l'une quelconque des revendications 1 à 8, dans laquelle les solubles dans le xylène à 25 °C sont situés dans la plage de 5.5 % en poids à 11,0 % en poids.

10. Composition polyoléfinique selon l'une quelconque des revendications 1 à 9, dans laquelle la viscosité intrinsèque, mesurée dans le tétrahydronaphtalène à 135 °C, de la fraction soluble dans le xylène à 25 °C est située dans la plage de 0,8 dl/g à 2,0 dl/g.

11. Composition polyoléfinique selon l'une quelconque des revendications 1 à 10, dans laquelle la différence entre la teneur en motifs dérivés de l'éthylène du constituant B et la teneur en motifs dérivés de l'éthylène du constituant B (C2B-C2A) est située dans la plage de 0,4 à 4,0 % en poids.

12. Composition polyoléfinique selon l'une quelconque des revendications 1 à 11 dans laquelle, dans le constituant B), l'indice de fluidité à chaud (230 °C/2,16 kg, ISO 1133) est situé dans la plage de 0,8 g/10 min à 9,0 g/10 min.

13. Composition polyoléfinique selon l'une quelconque des revendications 1 à 12, dans laquelle la teneur en motifs dérivés de l'éthylène, mesurée par RMN, dans la fraction soluble dans le xylène à 25 °C est située entre 17,2 % en poids et 21,3 % en poids.

14. Article moulé par soufflage comprenant la composition polyoléfinique selon l'une quelconque des revendications 1 à 12.

15. Bouteille comprenant la composition polyoléfinique selon l'une quelconque des revendications 1 à 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014173533 A
- WO 2016012199 A
- WO 2020148319 A
- US 4399054 A
- EP 45977 A
- US 4472524 A
- EP 361493 A
- EP 728769 A

### Non-patent literature cited in the description


- **C. J. CARMAN ; R. A. HARRINGTON ; C. E. WILKES**. Monomer Sequence Distribution in Ethylene-Propylene Rubber Measured by C NMR. 3. Use of Reaction Probability Mode. *Macromolecules*, 1977, vol. 10, 536
- **M. KAKUGO ; Y. NAITO ; K. MIZUNUMA ; T. MIYATAKE**. Carbon-13 NMR determination of monomer sequence distribution in ethylene-propylene copolymers prepared with δ-titanium trichloride-diethyl-aluminum chloride. *Macromolecules*, 1982, vol. 15, 1150
- **C.J. CARMAN ; R.A. HARRINGTON ; C.E. WILKES**. *Macromolecules*, 1977, vol. 10, 536